# EUROPÄISCHE PATENTSCHRIFT

(11) **EP 2 509 844 B1**
(45) Veröffentlichungstag und Bekanntmachung des Hinweises auf die Patenterteilung: **28.08.2013**
(21) Anmeldenummer: 10785341.8
(22) Anmeldetag: 16.11.2010
(51) Int. Cl.: B61D 15/00

(54) **ARBEITSWAGEN MIT EINER ARBEITSBÜHNE**
WORK CAR HAVING A WORK PLATFORM
WAGON DE SERVICE MUNI D'UNE PLATE-FORME DE TRAVAIL

(30) Priorität: 11.12.2009 DE 102009058009
(43) Veröffentlichungstag der Anmeldung: 17.10.2012
(73) Patentinhaber: Robel Bahnbaumaschinen GmbH, 83395 Freilassing (DE)
(72) Erfinder: HECHENBERGER, Peter, A-6382 Kirchdorf (AT); PFINGSTL, Andreas, 83395 Freilassing (DE)
(86) Internationale Anmeldenummer: PCT/EP2010/006978
(87) Internationale Veröffentlichungsnummer: WO 2011/069594

(56) Entgegenhaltungen:
- EP-A1- 0 667 316
- EP-A2- 0 345 538
- EP-A2- 0 433 935
- DE-U1- 9 317 548
- DE-U1- 29 512 717
- FR-A1- 2 673 586

## Beschreibung

Die Erfindung betrifft einen Arbeitswagen mit einem auf Schienenfahrwerken abgestützten Wagenrahmen und einem auf diesem befindlichen, durch eine Dachwand bezüglich einer Vertikalen nach oben begrenzten Wagenaufbau, wobei auf der Dachwand ein verschwenkbarer, mit einer Arbeitsbühne verbundener Tragarm angeordnet ist.

Gemäß EP 0 667 316 B1 ist ein gleisverfahrbarer Arbeitswagen bekannt, auf dessen Dachaufbau eine Arbeitsbühne abgestützt ist. Diese ist mit oberhalb des Dachaufbaus angeordneten, fernsteuerbaren Kupplungseinrichtungen lösbar mit dem Aufbau verbunden.

Die Aufgabe der vorliegenden Erfindung liegt nun in der Schaffung eines Arbeitswagens der eingangs genannten Art, dessen Arbeitsbühne mit einer konstruktiv einfach ausgebildeten Vorrichtung schnell und zuverlässig am Arbeitswagen fixiert werden kann.

Diese Aufgabe wird erfindungsgemäß mit einem Arbeitswagen der gattungsgemäßen Art dadurch gelöst, dass eine mindestens eine Klemmbacke aufweisende Verriegelungsvorrichtung für eine formschlüssige Verbindung des Tragarmes bzw. der Arbeitsbühne mit der Dachwand vorgesehen ist.

Eine derartige Lösung ermöglicht insbesondere im Gleisbogen eine unkomplizierte und effektive Fixierung und Sicherung der Arbeitsbühne für die Transport- bzw. Überstellfahrt. Mit der Verriegelungsvorrichtung kann die Arbeitsbühne bzw. der Tragarm unabhängig von der Gleisüberhöhung sicher fixiert und genau in Fahrzeugmitte zentriert werden. Eine zeitaufwendige Feinsteuerung und Nachjustierung der Arbeitsbühne für deren präzise Fixierung ist nicht erforderlich.

Weitere Vorteile der Erfindung ergeben sich aus den Unteransprüchen und der Zeichnungsbeschreibung.

Im Folgenden wird die Erfindung anhand in der Zeichnung dargestellter Ausführungsbeispiele näher beschrieben. Es zeigen:

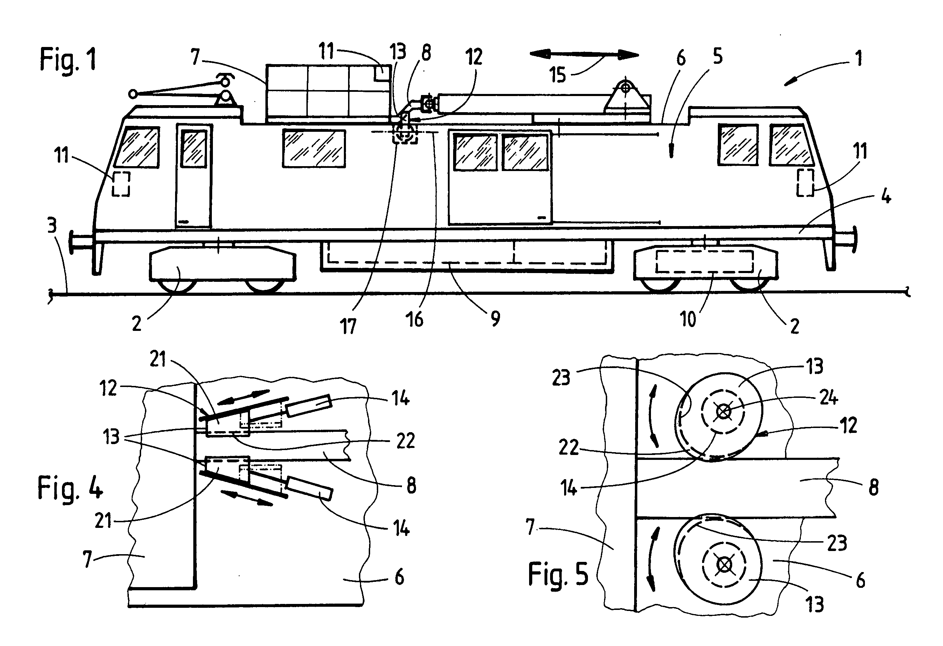

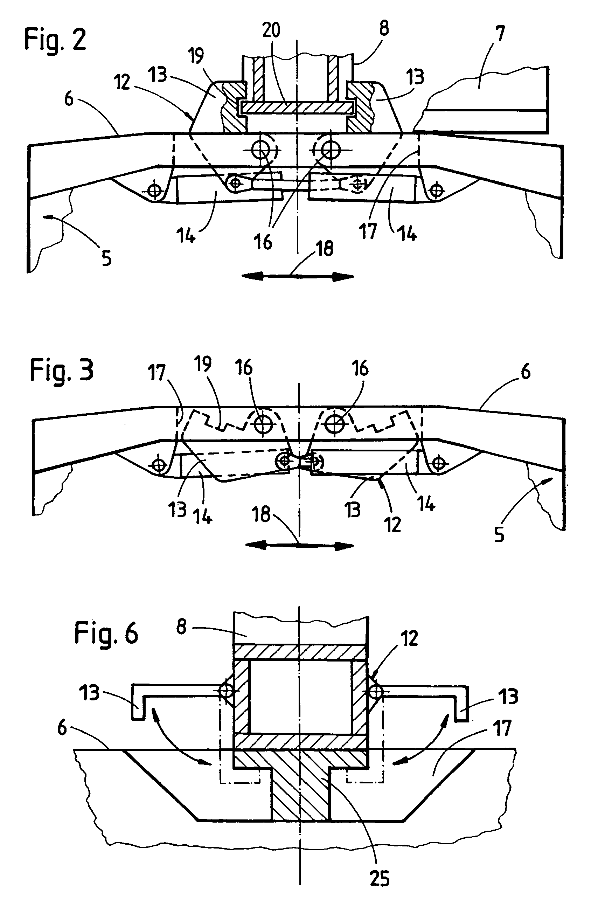

Fig. 1 eine schematische Seitenansicht eines Arbeitswagens, Fig. 2 und 3 vergrößerte Ansichten einer Verriegelungsvorrichtung in Wagenlängsrichtung, und Fig. 4 bis 6 weitere Ausführungsbeispiele von Verriegelungsvorrichtungen.

Ein in Fig. 1 ersichtlicher Arbeitswagen 1 besteht aus einem auf Schienenfahrwerken 2 abgestützten und auf einem Gleis 3 verfahrbaren Wagenrahmen 4. Ein darauf angeordneter Wagenaufbau 5 ist bezüglich einer Vertikalen nach oben durch eine Dachwand 6 begrenzt. Auf dieser befindet sich ein verschwenkbarer, mit einer Arbeitsbühne 7 verbundener Tragarm 8. Der Arbeitswagen 1 ist mit einem Motor 9 zur Versorgung eines Fahrantriebes 10 und sämtlicher noch zu beschreibender Antriebe ausgestattet. Sowohl der Arbeitswagen 1 als auch die Arbeitsbühne 7 sind mit Steuereinrichtungen 11 versehen, mit denen der Arbeitswagen 1 und die Arbeitsbühne 7 manövriert werden. Zur formschlüssigen Verbindung der Dachwand 6 mit dem Tragarm 8 bzw. der Arbeitsbühne 7 ist eine Verriegelungsvorrichtung 12 vorgesehen.

Wie in Fig. 2 und 3 dargestellt ist, besteht die Verriegelungsvorrichtung 12 aus zwei Klemmbacken 13, welche durch jeweils einen Antrieb 14 für eine Verschwenkung um eine in Wagenlängsrichtung 15 (Fig. 1) verlaufende Achse 16 von einer Verriegelungs- in eine Entriegelungsposition bzw. umgekehrt ausgebildet sind. In der Entriegelungsposition (Fig. 3) werden die Klemmbacken 13 zur Gewährung der freien Beweglichkeit des Tragarmes 8 in eine Vertiefung 17 der Dachwand 6 abgesenkt. Dadurch ist es möglich, die Arbeitsbühne 7 vorerst lediglich in horizontaler Ebene seitlich zu verschwenken, sodass eine Beschädigung der Oberleitung zuverlässig ausgeschlossen werden kann. Um die Verriegelungsposition (Fig. 2) einnehmen zu können, werden die beiden Klemmbacken 13 mit Hilfe ihrer Antriebe 14 an den - betreffend einer Wagen- bzw. Gleisquerrichtung 18 - zwischen den Klemmbacken 13 positionierten Tragarm 8 angepresst. Dieser wird damit automatisch in Bezug auf die Wagenmitte exakt zentriert. Jede Klemmbacke 13 weist eine Nut 19 zur Aufnahme eines Steges 20 des Tragarmes 8 auf. Dadurch wird bezüglich einer Vertikalen eine formschlüssige Verriegelung des Tragarmes 8 erzielt.

Bei der in Fig. 4 in Draufsicht dargestellten Verriegelungsvorrichtung 12 sind die Klemmbacken 13 als Keile 21 zur Anlage an den Tragarm 8 ausgebildet. Jeder durch einen eigenen Antrieb 14 verschiebbare Keil 21 ist zusätzlich mit einer über diesen vorstehenden Nase 22 für eine bezüglich der Vertikalen formschlüssige Verriegelung des Tragarmes 8 ausgestattet.

Wie in Fig. 5 ersichtlich, können die Klemmbacken 13 auch als Exzenterscheiben 23 zur Anlage an den Tragarm 8 ausgebildet sein. Jede Exzenterscheibe 23 ist mit Hilfe eines eigenen Antriebes 14 um eine vertikale Achse 24 verdrehbar und höhenverstellbar ausgeführt. Auch sie sind zusätzlich mit vorstehenden Nasen 22 für eine bezüglich der Vertikalen formschlüssige Verriegelung des Tragarmes 8 ausgestattet.

Fig. 6 zeigt ein weiteres Ausführungsbeispiel einer Verriegelungsvorrichtung 12, die aus wenigstens einer höhenverstellbar mit dem Tragarm 8 verbundenen Klemmbacke 13 gebildet ist. Bei der dargestellten Variante sind zwei Klemmbacken 13 vorgesehen, die für eine formschlüssige Verriegelung an einen in der Vertiefung 17 der Dachwand 6 positionierten und mit dieser verbundenen Anker 25 anpressbar sind.

## Patentansprüche

1. Arbeitswagen (1) mit einem auf Schienenfahrwerken (2) abgestützten Wagenrahmen (4) und einem auf diesem befindlichen, durch eine Dachwand (6) bezüglich einer Vertikalen nach oben begrenzten Wagenaufbau (5), wobei auf der Dachwand (6) ein verschwenkbarer, mit einer Arbeitsbühne (7) verbundener Tragarm (8) angeordnet ist, **dadurch gekennzeichnet, dass** eine mindestens eine Klemmbacke (13) aufweisende Verriegelungsvorrichtung (12) für eine formschlüssige Verbindung des Tragarmes (8) bzw. der Arbeitsbühne (7) mit der Dachwand (6) vorgesehen ist.

2. Arbeitswagen nach Anspruch 1, **dadurch gekennzeichnet, dass** die Verriegelungsvorrichtung (12) - zur Erzielung einer eine freie Beweglichkeit des Tragarmes (8) gewährleistenden Entriegelungsposition - durch Antriebe (14) in eine Vertiefung (17) der Dachwand (6) absenkbar ist.

3. Arbeitswagen nach Anspruch 1 oder 2, **dadurch gekennzeichnet, dass** die Verriegelungsvorrichtung (12) aus zwei Klemmbacken (13) gebildet ist, die bez. einer Wagen- bzw. Gleisquerrichtung (18) an den dazwischen positionierten Tragarm (8) - zur Erzielung einer Verriegelungsposition - anpressbar sind.

4. Arbeitswagen nach Anspruch 3, **dadurch gekennzeichnet, dass** jeder Klemmbacke (13) ein eigener Antrieb (14) für eine Verschwenkung um eine in Wagenlängsrichtung (15) verlaufende Achse (16) - von der Verriegelungs- zur Entriegelungsposition bzw. umgekehrt - zugeordnet ist.

5. Arbeitswagen nach Anspruch 3 oder 4, **dadurch gekennzeichnet, dass** jede Klemmbacke (13) eine Nut (19) zur Aufnahme eines Steges (20) des Tragarmes (8) für eine bez. einer Vertikalen formschlüssigen Verriegelung aufweist.

6. Arbeitswagen nach Anspruch 3, **dadurch gekennzeichnet, dass** jede Klemmbacke (13) als Keil (21) zur Anlage an den Tragarm (8) ausgebildet ist.

7. Arbeitswagen nach Anspruch 3, **dadurch gekennzeichnet, dass** jede Klemmbacke (13) als um eine vertikale Achse (24) verdrehbare und höhenverstellbare Exzenterscheibe (23) zur Anlage an den Tragarm (8) ausgebildet ist.

8. Arbeitswagen nach Anspruch 1, **dadurch gekennzeichnet, dass** die Verriegelungsvorrichtung (12) aus wenigstens einer höhenverstellbar mit dem Tragarm (8) verbundenen Klemmbacke (13) gebildet ist, die für eine formschlüssige Verriegelung mit einem in einer Vertiefung (17) der Dachwand (6) positionierten und mit dieser verbundenen Anker (25) an diesen anpressbar sind.

## Claims

1. A work vehicle (1) having a vehicle frame (4), supported on on-track undercarriages (2), and a vehicle superstructure (5) located thereon which is upwardly delimited - with regard to a vertical - by a roof panel (6), wherein a pivotable supporting arm (8) connected to a work platform (7) is arranged on the roof panel (6), **characterized in that** a locking device (12) having at least one clamping jaw (13) is provided for form-fitting connection of the supporting arm (8) or the work platform (7) to the roof panel (6).

2. A work vehicle according to claim 1, **characterized in that** the locking device (12) - for achieving an unlocking position ensuring free mobility of the supporting arm (8) - can be lowered by means of drives (14) into a recess (17) of the roof panel (6).

3. A work vehicle according to claim 1 or 2, **characterized in that** the locking device (12) is formed of two clamping jaws (13) which - for achieving a locking position - can be pressed, with regard to a transverse direction (18) of the vehicle or track, to the supporting arm (8) positioned between the same.

4. A work vehicle according to claim 3, **characterized in that** a separate drive (14) is associated with each clamping jaw (13) for pivoting about an axis (16), extending in the longitudinal direction (15) of the vehicle, from the locking position into the unlocking position or vice versa.

5. A work vehicle according to claim 3 or 4, **characterized in that** each clamping jaw (13) has a groove (19) for receiving a bar (20) of the supporting arm (8) for form-fitting locking with regard to a vertical.

6. A work vehicle according to claim 3, **characterized in that** each clamping jaw (13) is designed as a wedge (21) to be applied to the supporting arm (8).

7. A work vehicle according to claim 3, **characterized in that** each clamping jaw (13) is designed as an eccentric disc (23), rotatable about a vertical axis (24) and vertically adjustable, to be applied to the supporting arm (8).

8. A work vehicle according to claim 1, **characterized in that** the locking device (12) is formed of at least one clamping jaw (13) which is vertically adjustably connected to the supporting arm (8) and, for form-fitting locking with an anchor (25) positioned in a recess (17) of the roof panel (6) and connected to the latter, is designed for being pressed to said anchor (25).

## Revendications

1. Wagon de travail (1) avec un châssis de wagon (4) appuyé sur des mécanismes de roulement ferroviaires (2) et une structure de wagon (5) se trouvant sur celui-ci, limitée vers le haut par rapport à une verticale par une paroi de toit (6), dans lequel un bras porteur pivotant (8) relié à une nacelle (7) est disposé sur la paroi de toit (6), **caractérisé en ce qu'**un dispositif de verrouillage (12) présentant au moins une mâchoire de serrage (13) est prévu pour une connexion par conjugaison de formes du bras porteur (8) ou de la nacelle (7) à la paroi de toit (6).

2. Wagon de travail selon la revendication 1, **caractérisé en ce que** le dispositif de verrouillage (12) peut être abaissé par des entraînements (14) dans un renfoncement (17) de la paroi de toit (6) pour l'obtention d'une position de déverrouillage garantissant une mobilité libre du bras porteur (8).

3. Wagon de travail selon la revendication 1 ou 2, **caractérisé en ce que** le dispositif de verrouillage (12) est formé de deux mâchoires de serrage (13) qui peuvent être appliquées contre le bras porteur (8) positionné entre elles par rapport à une direction transversale du wagon ou de la voie (18) pour l'obtention d'une position de verrouillage.

4. Wagon de travail selon la revendication 3, **caractérisé en ce qu'**un entraînement propre (14) pour un pivotement autour d'un axe (16) s'étendant dans la direction longitudinale du wagon (15) de la position de verrouillage vers la position de déverrouillage ou inversement est associé à chaque mâchoire de serrage (13).

5. Wagon de travail selon la revendication 3 ou 4, **caractérisé en ce que** chaque mâchoire de serrage (13) présente une rainure (19) pour le logement d'une traverse (20) du bras porteur (8) pour un verrouillage par conjugaison de formes par rapport à une verticale.

6. Wagon de travail selon la revendication 3, **caractérisé en ce que** chaque mâchoire de serrage (13) est réalisée en tant que coin (21) pour l'appui sur le bras porteur (8).

7. Wagon de travail selon la revendication 3, **caractérisé en ce que** chaque mâchoire de serrage (13) est réalisée en tant que disque excentrique (23) pouvant tourner autour d'un axe vertical (24) et réglable en hauteur pour l'appui sur le bras porteur (8).

8. Wagon de travail selon la revendication 1, **caractérisé en ce que** le dispositif de verrouillage (12) est formé d'au moins une mâchoire de serrage (13) réglable en hauteur reliée au bras porteur (8) qui peut s'appliquer contre une ancre (25) positionnée dans un renfoncement (17) de la paroi de toit (6) et reliée à celle-ci pour un verrouillage par conjugaison de formes avec cette ancre.
